# EUROPEAN PATENT APPLICATION

(11) **EP 1 727 043 A2**
(43) Date of publication of application: **29.11.2006**
(21) Application number: 06252727.0
(22) Date of filing: 25.05.2006
(51) Int. Cl.: G06F 9/445

(54) **Dynamic mapping of shared libraries**

(30) Priority: 25.05.2005 US 137526
(71) Applicant: Agilent Technologies, Inc., Palo Alto, CA 94306 (US)
(72) Inventor: Stone, Peter, Loveland, CO 80537-0599 (US)
(74) Representative: Tunstall, Christopher Stephen

(57) **Abstract**

A method and system to adapt a processing system to cause an application that references an original d11 with an original API to be simultaneously compatible with a new d11 sharing the original API that establishes a router module having the original API and a router name, renames the original d11 having an original name to a first name, stores the new d11 under a second name, and stores the router under the original name. The router intercepts all calls to the original d11 from the application and administers access between the application and the original and new d11s.

## Description

### BACKGROUND

Current software practice makes use of dynamically loadable libraries (herein "dlls") as a vehicle to build new software from existing software. The term "dll" is generally known to those of ordinary skill to as a term with the Windows environment. In other programming environments, dlls may also be referred to as shared libraries. The dlls or shared libraries typically contain a collection of functions that perform various general and useful tasks. Software developers reference the functions that are available in one or more dlls/libraries 102 when creating a new software application 100. The functions, therefore, provide reusable software building blocks upon which the new application is built. There are many different kinds of dlls/libraries available. Example dlls/Iibraries include mathematical function libraries, communication libraries, graphical user interface libraries, and I/O libraries. The practice of reusing functions renders program development faster and easier in much the same way standard hardware parts render design and manufacture of devices faster and easier. The term "dll" is used herein to describe both the "dll" and the "library" concepts.

Application programming interfaces (herein "APIs") 104 are defined for all dlls 102. An API 104 is a set of rules and protocols that define the format and parameters that the application 100 must follow to make proper use of the dll functions. The API 104, therefore, governs the interaction of the application 100 with the dll 102: When an application or other software module that references a function in a dll is built, it creates a symbol in the object code that directs the retrieval of the relevant dll and function within the dll. At run time, the application must have the dll available to it. The application contains code that directs a search for the dll and also points to a location of the dll so the application can retrieve the function based upon the embedded symbol for execution in the application context. The information in the application is typically a specific name of the library file and possibly a specific location. As one of ordinary skill in the art appreciates, therefore, it is not possible for two dlls having the same name to coexist in the same location. Because of the dynamic nature of the dlls, however, it is possible for the same application to use different dlls at two different run times by replacing the original dll with a new dll having the same name.

There are situations where multiple vendors offer similar libraries having the same or similar functions that use a common API definition. If common APIs are used, the dynamic nature of dlls makes it possible to replace the vendor1 dll/hardware combination with the vendor2 dll/hardware combination without requiring a modification and recompile of the application. As an example, an application may be provided that makes use of a dll/hardware combination from vendor1. Vendor2 may offer a replacement dll/hardware combination product. In such an example, the vendor2 replacement dll has a common API with the dll from vendor1. The dll from vendor2 is made available to the application at the same filename and file location at application run time. Using dlls, therefore, the I/O libraries are interchangeable in that the application may be run using the dll from vendor1 accessing hardware from vendor1 and then run again at a later time using the dll from vendor2 accessing hardware from vendor2. Even though the hardware from vendor1 and vendor2 perform the same function, they have different dlls, but because they share an API, they may be accessed by the application without modification of the application. Under the prior art however, the dlls from vendor1 and vendor2 may not be used by the application in the same execution of the program without modification to the application directing access to the different dlls. The application may be modified to recognize both dlls and the dlls may be renamed consistent with the modifications to the application. The modification and the requirement to modify the application, however, begin to erode the benefit of using dlls. The modification takes time, requires a recompile, requires working knowledge of the application program structure, and also provides opportunity for error and debug. If a vendor requires modification of an existing operational application in order to use the new dll/hardware in combination with the original dll/hardware, the disadvantages associated with the modification may preclude the customer's acceptance of the new dll and hardware.

There is benefit to a migration path from one dll/hardware combination to another that includes intermediate use of both. There is further benefit to using two different vendor's dll/hardware combinations at the same time. In addition, it is preferred to minimize the impact of this transition on the application program. Accordingly, there is a need for a system and method to permit seamless coexistence of dlls using a common API with minimal modification to the application that uses the dlls.

### BRIEF DESCRIPTION OF THE DRAWINGS

An understanding of the present teachings can be gained from the following detailed description, taken in conjunction with the accompanying drawings of which:

FIGURE 1 is a simplified diagram of interaction between a dll and an application that accesses it according to the prior art.

FIGURE 2 is a simplified diagram of interaction between an application and two dlls having a shared API according to the present teachings.

FIGURE 3 is a flow chart of an embodiment of a background process according to the present teachings that adapts a file structure to permit an application that originally accessed a single dll with an API to access two or more dlls with the same API.

FIGURE 4 is a flow chart of a portion of an embodiment of a portion of the background process that returns the file structure to its original state upon exiting the application.

FIGURE 5 is a representation of an embodiment of data flow between the application, router and dlls according to the present teachings.

FIGURES 6 through 11 are flow charts of specific embodiments of processes performed by the router according to the present teachings when a function call is made by the application.

### DETAILED DESCRIPTION

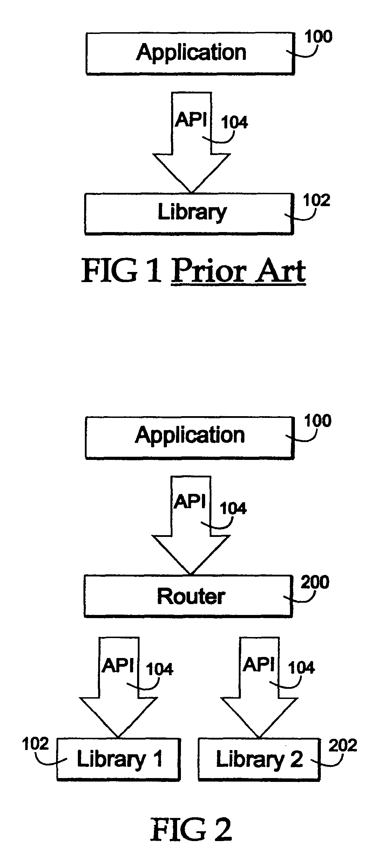

With specific reference to FIGURE 2 of the drawings, there is shown a simplified diagram of the application 100 accessing a router 200 according to the present teachings in which the API 104 for the router 200 is the same as the API 104 for the original dll 102 and the new dll 202. The router 200, therefore, is also a dll with the same function names as the functions of the original and new dlls wherein the router functions provide administration and access to the functions of the original dll 102 and the new dll 202. The router 200 uses the original 104 API to administer communication between the application 100 and the original dll 102 as well as a new dll 202. The router 200 functions intercept all calls from the application 100 to the original dll and determines which one of the dlls having the original API 104 is the relevant library for the specific function. Each function call includes at least one identifying parameter upon which the relevant library determination is based. The router 200 then calls the function on the relevant library passing it all of the appropriate parameters that were passed to the router 200. The router 200, therefore, administers communication between the application 100 and the dlls while the application 100 is written to access only one set of dll functions. In the illustrated embodiment, it is shown only that the router 200 accesses the original dll 104 and the new dll 202 using the shared API. In a specific embodiment, the original dll 104 and the new dll are I/O libraries that control tasks performed by respective I/O hardware. The application 100 is written to find and reference only the original dll 102 having an original name and location. In order for the new I/O hardware and the associated new dll 202 to coexist, the router 200 is interposed between the application and the original and new dlls 102, 202. The router 200 is designed to administer communication to underlying dlls having unique first and second names. In another embodiment, the original and new dlls may be graphics libraries that reference the same hardware. In the alternate embodiment, more than two dlls with the same API may be desirable. The present teachings may be adapted so that the router 200 administers communication between the application 100 and more than one dll 102, 202.

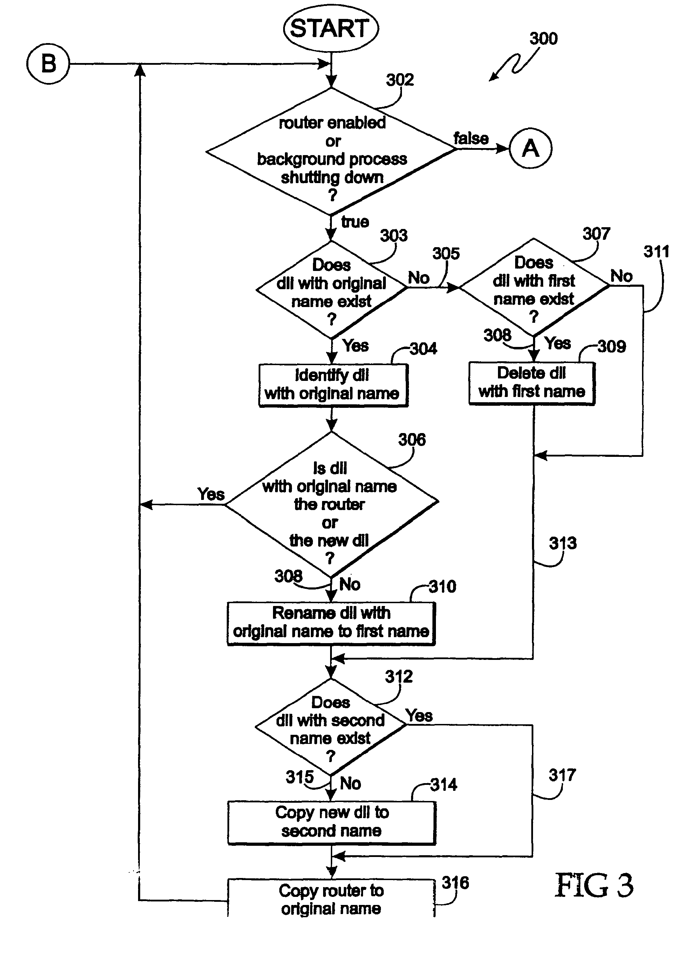

With specific reference to FIGURE 3 of the drawings, there is shown a flow chart of a background process 300 according to the present teachings that adapts the system to accommodate dual dlls. In an alternate embodiment, the background process adapts the system to accommodate more than two dlls. In order to provide for adaptation when and if a new dll is installed, a router enable flag may be set by the user. The background process 300 may make a check at regular intervals of time, between 1 and 5 minutes for example, or may make use of an operating system interrupt function available to alert the background process 300 of a registered event. In either case, the background process 300 checks for a value of the router enable flag 302. The router enable flag 302 may be set by the user to a logic true to indicate to the system that the user wants to use the multiple dll capability and the may be set to a logic false to ignore the multiple dll capability. If the router enable flag is true, the user has indicated that it wants the background process to configure the system to work with more than one dll having the shared API 104 and the background process 300 determines if the dll having the original name exists 303. If it does, the process identifies 304 and evaluates 305 the dll with the original name. If the contents of the dll having the original name are the same as the contents of the router 200 or the new dll 202, see reference numeral 306, then no further action is taken and the background process 300 loops back to the portion of the process that checks the router enable flag 302. In this path of the process, it is determined that the system is already properly adapted. If the contents of the dll with the original name are different 308 from the contents of the new dll 202 and the router 200, then the background process determines that an update is indicated and proceeds to adapt the system to enable the operations of the router 200. The background process renames 310 the dll with the original name to the unique first name. If the dll with the original name does not exist 305, the process determines 307 if a dll with the first name exists. If it does 308, the dll with the first name is deleted 309 and the process continues 313 to just after the step of renaming 310 the dll with the original name to the first name. Otherwise 311, no action is taken and the process continues 313 to just after the step of renaming 310 the dll with the original name to the first name. The background process 300 determines 312 whether a dll having the second name exists. If not 315, the process copies 314 the new dll 202 to the unique second name. If the dll having the second name does exist 317, the process skips the step of copying 314 the new dll to the second name because it is already there. The new dll 202 may be held in a new dll reserve file in another part of the file system or the new dll may be already stored under the unique second name. The router 200, which is held in a router reserve file in another part of the file system, is then copied 316 to a file having the original name at the original location. Accordingly, the router 200, which shares the API with the original dll and has the name of the original dll is accessed by the application 100 as if it were the original dll 102. When the file system adaptation is complete, the background process 300 returns to the portion of the process that monitors the enable flag 302. In the specific embodiment as shown in FIGURE 3 of the drawings, the background process 300 is responsive to update the system in the event that a new version of the original file that was renamed to the unique first name is installed after the background process starts. Also, in the specific embodiment, the background process is able to accommodate the situations where the router is enabled, but only one dll is available to it.

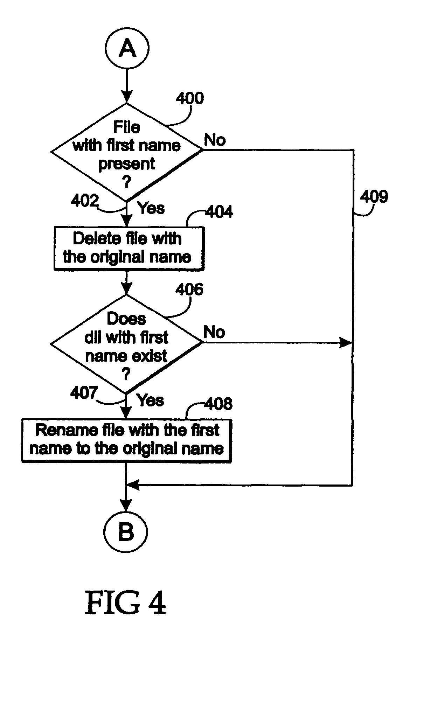

With specific reference to FIGURE 4 of the drawings, if the enable flag is false 316, the background process 300 returns the file system to a state where it accesses only the original dll 102. In a specific embodiment, the router enable flag is set to false under one of two possible conditions. In a first condition, the user does not want the multiple dll capability enabled. In a second condition, the background application 300 is shut down. In both cases, the file system is returned to the state where only one dll is accessed by the application 100. It is possible that the enable flag is true and the file system is not adapted to access multiple dlls. The background process 300, therefore, also checks for that condition. With specific reference to FIGURE 4 of the drawings, the background process 300 returns the file system to its pre-adaptation state by identifying 400 whether the file having the first name is present. If so 402, the router 200 having the original name is deleted 404. The process then determines 406 if the dll having the first name exists. If so 407, the file having the first name is renamed 408 to the original name. If not 409, the renaming step is not executed. Because the original dll is restored to its original name, the application 100 makes direct reference to the original dll. If no file is found 409 with the first name, it is assumed that the adaptation to multiple dlls is not made and the process returns to the portion of the process that monitors the enable flag 302, see FIGURE 3 of the drawings.

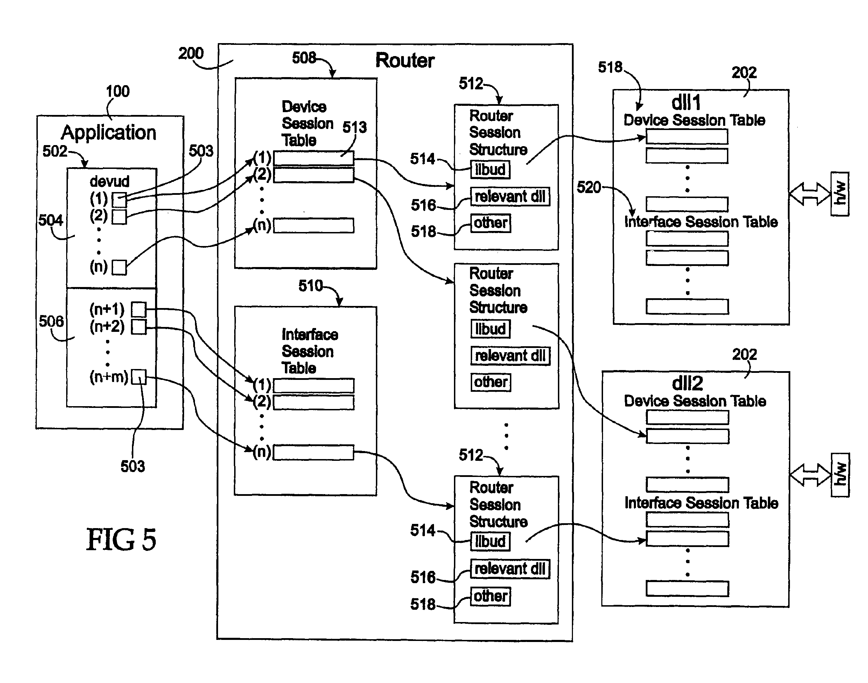

With specific reference to FIGURE 5 of the drawings, there is shown a data flow diagram according to the present teachings that illustrates a specific embodiment of the data structures in the application 100, the router 200, and the original and new dlls 102, 202 and the relationship therebetween. As one of ordinary skill in the art appreciates, there are other structures that would also provide administration for an embodiment according to the present teachings, the one in FIGURE 5 being shown for purposes of illustrative example. The application maintains a device unit identifier array 502. Each device unit identifier (herein "devud 503") in the array 502 contains a zero value to indicate no association or an index value. The device unit identifier array 502 is bifurcated. A first portion 504 of the array corresponds to devices and a second portion 506 of the array corresponds to interfaces. In a specific embodiment, there are 256 device entries in the first portion 504 and 256 interface entries in the second portion 506. Accordingly, in the specific embodiment, the application program detects a device entry if the index into the device unit identifier array 502 is between 1 and 256 and an interface entry if the index into the device unit identifier array 502 is between 257 and 512. The router 200 maintains a device session table 508 and a parallel interface session table 510 that are persistently available to the router s intermediate referencing tools permitting the router 200 to administer access to the new and original dlls 102, 202 each time a router function is executed. The device session table 508 contains an array of pointers 513. The devud value in each entry of the device unit identifier array 502 is an index into the device session table array 508 or the interface session table 510. Each pointer in the device and interface session tables 508, 510 may be used to access one of a plurality of router session structures 512. Each router session structure contains a library unit identifier (herein "libud 514"), a relevant library reference 516, and other information specific to the device. The libud 514 is used as a reference pointer into a device session table 518 or an interface session table 520 that is kept within the dll 102 or 202. Each dll 102, 202 has a data structure (not shown) that corresponds to a respective one of the router session structures 512, is referenced by the libud 514 value passed to the underlying dll 102 or 202. The libud 514 value is used by the underlying library 102 or 202 to retrieve a dll session structure (not shown) in the underlying library 102 or 202. The dll session structure is analogous to the router session structure 512, but provides information to the underlying dll 102, 202. This libud 514 value and its associated dll session structure 512 determines the specific hardware and device that the relevant library accesses for the function called. The relevant library references 516 the specific dll 102 or 202 that is used for the function call to access the device or interface from the router 200. The other relevant information 518 that is part of the router session structure depends upon the device or interface that the session structure 512 supports. Advantageously, the indirect addressing within the router 200 as shown as part of a specific embodiment according to the present teachings provides for a level of error protection and prevents access to unallocated memory.

As previously described, the router 200 is a dll, separate from the new and original dlls 102, 202, and shares the same API 104 as the original dll 102. Accordingly, there is a one to one correspondence between the router 200 and all functions in the original and new dlls 102, 202. The same number and type of parameters are passed to the function in the router 200 as in the corresponding function in the new and original dlls 102, 202.

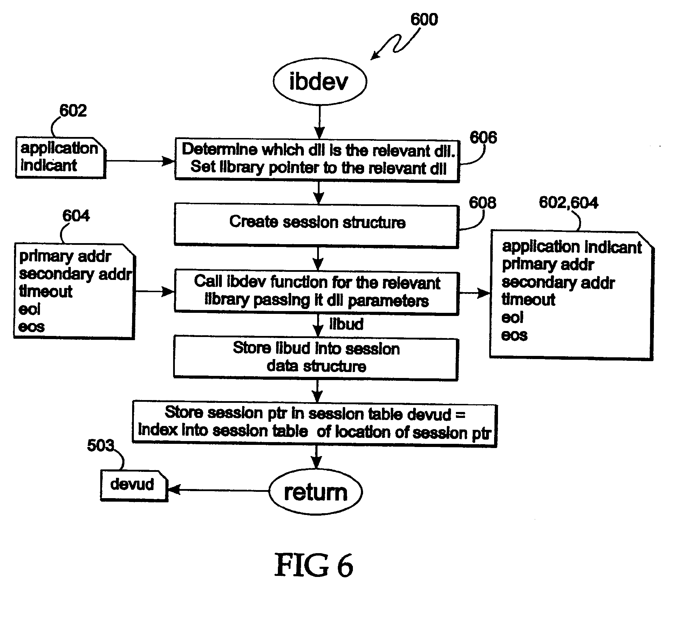

With specific reference to FIGURE 6 of the drawings, there is shown a flow chart for an ibdev function, which is part of a specific embodiment of an original dll for input/output and device control operations. In a specific embodiment of a dll that may be used according to the present teachings, the application 100 makes a call to the ibdev function to open a communication session before subsequent communication with the device or interface. The ibdev function is called in a first access to a device or interface and returns a reference to the device used for subsequent function calls to the same device. Because the original dll 102 contains the ibdev function, the router 200 contains a function with the same name. FIGURE 6 of the drawings illustrates the process of the router ibdev function. The ibdev functions for the underlying libraries, the original and new dlls 102, 202, are unchanged. The application 100 calls the ibdev function and if the router is enabled, initiates the router ibdev function. The application passes the following parameters as defined for the ibdev function in the API 104: an application indicant 602, a primary address, a secondary address, a timeout, an EOI mode (enable or disable the assertion of the GPIB EOI line at the end of a 'write' operation) and an EOS character and modes (configure the end-of-string mode or character), collectively shown as 604. The application indicant 602 is unique to the hardware to be controlled. The router 200, therefore, is able to determine 606 the relevant dll to call based upon the application indicant value. The ibdev function then allocates 608 memory for the router session structure 512 related to the device defined by the application indicant 602 and stores the relevant dll information within the router session structure 512. The router 200 then calls the ibdev function in the relevant underlying dll and passing to it all of the parameters it received from the application 100. The ibdev function for the underlying dll returns the library unit descriptor 514 given to it. The library unit descriptor 514 is a unique number stored in the device/interface session table 518/520 within the underlying dll 102 or 202 that provides reference to the specific device under control. The router 200 receives the returned library unit descriptor 514 and stores it in the appropriate router session structure 512 within the router 200. A pointer to the router session structure 512 that contains the library unit descriptor 514 is a session pointer 513. The router 200 stores the session pointer 513 in the device session table 508. An index of the entry of the session pointer 513 in the device session table is the devud 503 and identifies a location of the session pointer in the device session table 508. The router 200 returns the devud 503 to the application 100. In subsequent calls to the device, the application uses the devud 503 for access to the device via the router 200.

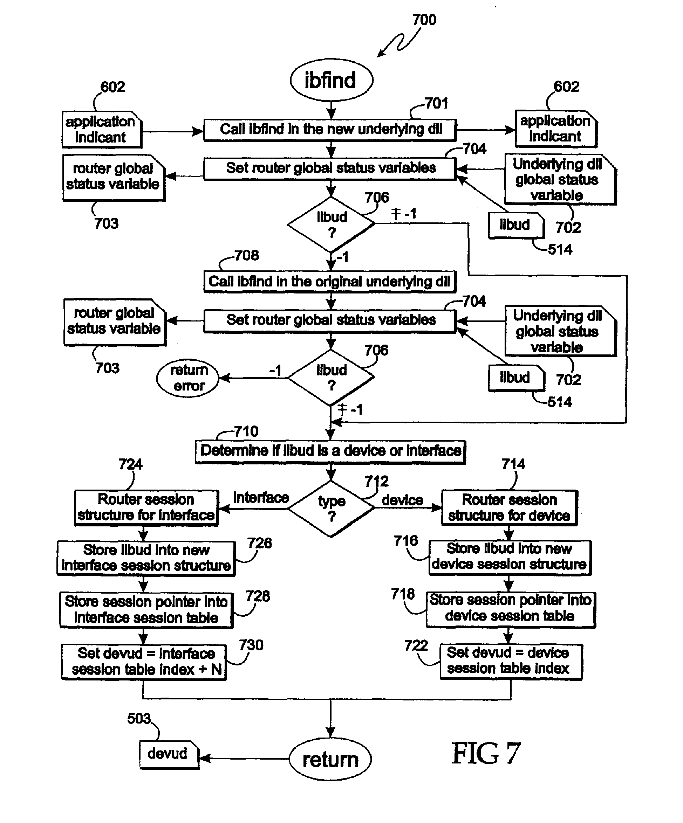

With specific reference to FIGURE 7 of the drawings, there is shown a flow chart for a router ibfind function 700. The router ibrind function 700 calls the underlying dll ibfind function in one or more of the underlying dlls 102, 202. In the specific embodiment of an IEEE-488 I/O library, the underlying ibfind function is similar to the underlying ibdev function in that it opens a session for subsequent function calls to a specific device. The underlying ibfind function is distinct from the underlying ibdev function in that it may be used to open a device session and may also be used to open a session to an interface. The application 100 sends the device identifer 602 to the router ibfnd function 700. The application indicant 602 references either a device or an interface. When it is called, the router ibfind function 700 calls 701 the ibfind function in the underlying second dll 202 passing to it the application indicant 602. Depending upon the hardware set-up and application indicant value, the function call to the ibfind in the underlying new dll 202 succeeds or fails. If it succeeds, the underlying ibfind function returns the libud 514 that references the appropriate session table in the underlying new dll 202. If the ibfind function call to the underlying new dll 202 failed, the underlying ibfind function returns a libud 514 value of -1. The application 100 may want to check and trap errors based upon underlying dll global status variables 702. Accordingly, the router 200 maintains router global status variables 703 that correspond to the underlying dll global status variables 702. The ibfind of the underlying dlls 102, 202 sets the underlying dll global status variables 702 based upon the execution of the underlying ibfind function. The router ibfind function 700 then accesses the underlying dll global status variables 702 and sets 704 respective ones of the local router global status variables 703 to the same values. If 706 the libud 514 has a value of -1, the router ibfind function 700 calls 708 the ibfind function in the underlying original library 102. If the call to the ibfind function in the underlying original dll 102 succeeds, it returns the libud 514 that references the appropriate session table in the underlying original dll 102. If the ibfind function in the underlying dll call failed, the original libraries ibfind function returns a libud 514 value of -1. The router ibfind function 700 then accesses the underlying global status variables 702 from the original dll 102 and sets 704 the router global status variables 703 based upon the underlying dll global status variables 702. If the ibfind function call to the underlying original dll 102 call failed, the router returns a value of -1 to the user indicating a failure. If the ibfind function call to the original underlying dll 102 succeeded, the libud 514 returned is a reference into the appropriate session table in the underlying original dll 102. In an alternate embodiment, a series of additional calls to the ibfind function in additional underlying libraries may be made to identify and then associate the dll 102,202 that supports the application indicant 602 passed to it. The alternate embodiment may also include the subsequent setting of the router global status variables 703 based upon the underlying dll global status variables 702. If the libud 514 has a -1 value, then calls to the ibfind function in all underlying dlls 102, 202 failed and the router ibfind function returns a - 1 to the application 100 indicating that the router ibfind function failed. If the libud 514 has a value other than a - 1, at least one of the underlying dlls 102 or 202 is able to support the hardware with the designated application indicant 602 and the libud 514 is valid. The router ibfind function then determines 710 if the libud 514 refers to a device or an interface. In a specific embodiment, the range of values for libud's 514 that reference an interface are offset by some number, 256 as an example, relative to the libud's 514 that reference a device. Alternative embodiments include a different offset to distinguish between the device and interface or separate tables that may be queried that lists libud's for devices and interfaces. If 712 the libud 514 references a device, the router ibfind function creates 714 one of the router session structures 512 for a device. The libud 514 is stored 716 into the new router session structure 512, and the session pointer 513 is stored 718 into the device session table 508. The devud 503 is set 722 equal to the index in the device session table 504 and is returned to the application 100 as the devud 503. If 712 the libud 514 references an interface, the router ibfind function creates 724 one of the router session structures 512 for a device. The libud 514 is stored 726 into the new interface session structure, and the session pointer 513 is stored 728 into the interface session table 510. The devud 503 is set 730 equal to N plus the index in the interface session table 510 and is returned to the application 100 as the devud 503. In a specific embodiment N is equal to 256.

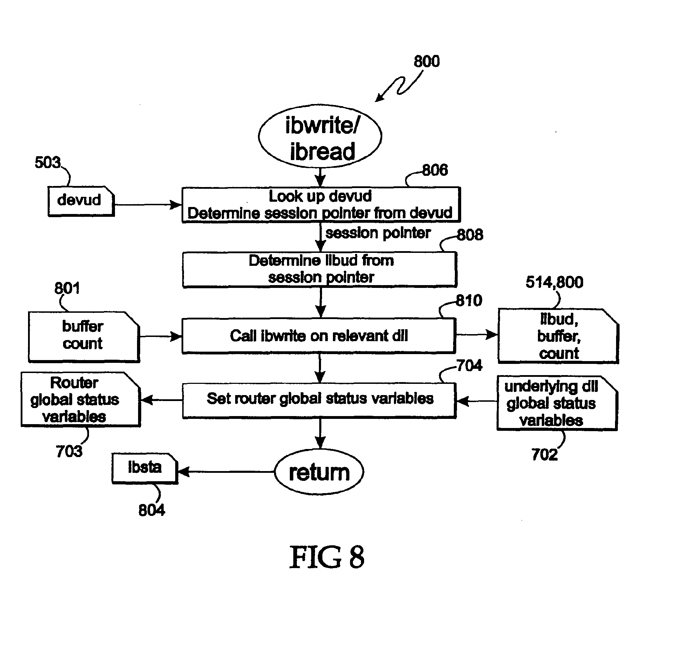

With specific reference to FIGURE 8 of the drawings, there is shown a flow chart for a router ibwrite/ibread function. In a specific embodiment of the original/new dlls 102, 202, the ibwrite function is called to send a message to a device that has already been established using the router ibdev function 600. Similarly, the ibread function is called to receive a message from an already established device. The specific embodiment of the original/new dlls 102, 202 also includes an ibread function. The router ibwrite and ibread functions are virtually identical except that the router 200 calls the underlying library's ibwrite or ibread function. The API 104 for the ibwrite/ibread functions includes a unit descriptor, a buffer count 801, and an ibstatus variable 804. The application 100 calls the router ibwrite/ibread function 800 sending it the devud 503. The router 200 references the index in the device session table 508 as specified by the devud 503 to determine the session pointer 513 for the relevant router session structure 512. The router 200 accesses the appropriate router session structure 512 based upon the session pointer 513 and determines 808 the relevant dll 516 and the libud 514. The router 100 calls 810 the ibread/ibwrite function in the relevant dll 516 passing it the libud 514 and the buffer count 800. The ibwrite/ibread function in the relevant underlying dll 102 or 202 executes and sets the underlying dll global status variables 702. Based upon the underlying global status variable 702, the router ibread/ibwrite function 800 sets 704 the router global status variables 703 including an ibstatus flag 804 and returns the ibstatus flag 804 to the application 100 via the API 104.

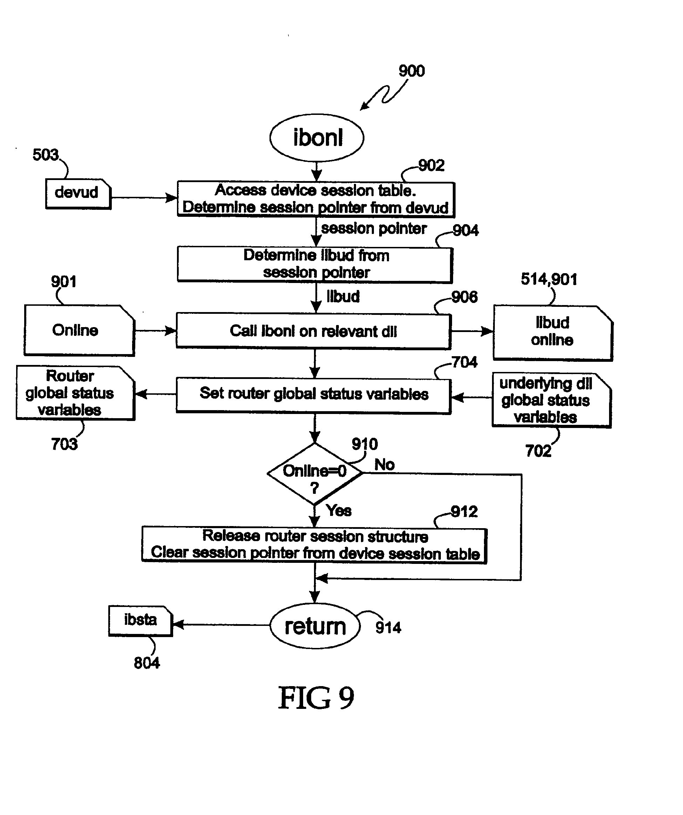

With specific reference to FIGURE 9 of the drawings, there is shown a flow chart for a specific embodiment of a router ibonl function 900 process flow. The ibonl function of the underlying dlls 102, 202 releases memory allocated to administer communication to the device or interface specified in the API 104. After a device is taken off line, the ibdev function 600 must be called to re-establish administration of communication to the device. The router ibonl function 900 accepts the devud 503 and an online bit 901. Based upon the devud 503, the router 200 accesses 902 the device session table 508 or the interface session table 510 and determines the session pointer 513 associated with the device specified. The router 200 determines 904 the libud 514 and the relevant dll 516 based upon the session pointer 513 and calls 906 the ibonl function on the underlying dll 102 or 202 passing to it the libud 514 and the online bit 901. The ibonl function of the underlying library 102 or 202 uses the libud 513 to access administrative functions for the device and to communicate with the device and sets the underlying dll global status variables 702. When control returns to the router ibonl function 900 from the ibonl function of the underlying dll 102 or 202, the router ibonl function sets 704 the corresponding router global status variables 703 to be consistent with the underlying dll global status variables 702. The router ibonl function 900 then checks 910 a value of the online parameter 901. If the online parameter 901 does not have the value 0, the device is to remain on line and the router ibonl function 900 ends and returns the ibsta error flag 804 to the calling application 100. If the online parameter 801 has the value 0, the router ibonl function 900 releases 912 the memory allocated to the session structure 512 for the specific device or interface and clears the session pointer 513 in the device session table 508 before returning control 914 to the calling application 100 with the ibsta error flag 804 as a parameter.

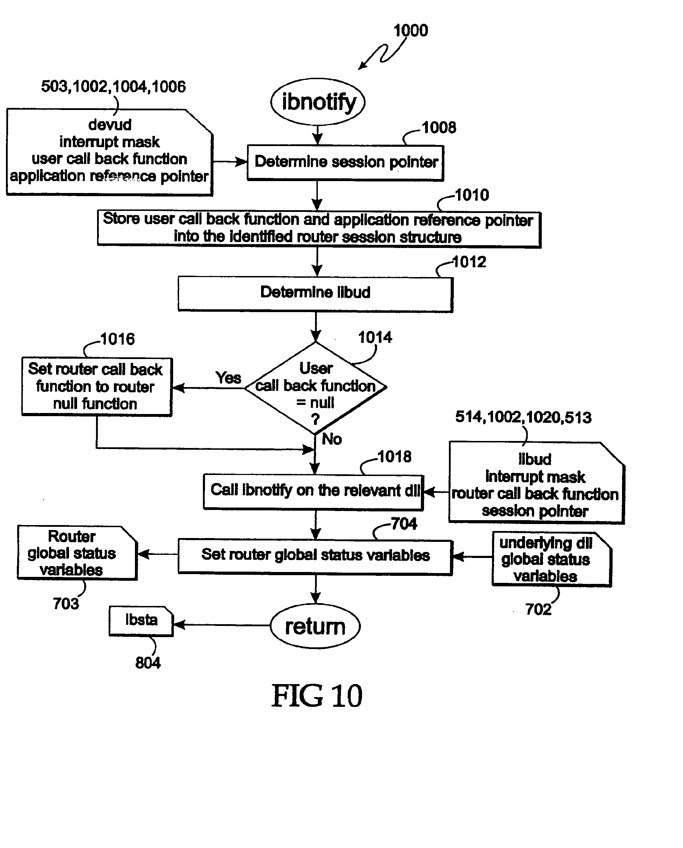

With specific reference to FIGURE 10 of the drawings, there is shown a specific embodiment of a router ibnotify function 1000 according to the present teachings. In a specific embodiment of a router for an IEEE-488 I/O library, the ibnotify function 1000 permits the user to establish an interrupt to a function in the application 100 based upon one or more events that occur on an interface. The ibnotify function further permits programmable selection of one or more events to generate the interrupt. A function in the underlying dll 102 or 202 executes in the background and monitors the status of the events programmed with an interrupt mask. When one or more of the programmed events occurs, the underlying dll calls a user defined function in the application 100. In an adaptation of the call back function according to the present teachings, the router 200 administers all of the call back functions by programming all interrupts to call a router call back function 1020. The router call back function 1020 in turn calls the user programmed call back function 1004 in the application 100. To set up an interrupt, the application 100 calls the router ibnotify function 1000 passing four parameters to it: the devud 503, an interrupt mask 1002, a user call back function 1004, and an application reference pointer 1006. The router ibnotify function 1000 determines 1008 the appropriate session pointer 513 associated with the devud 503 specified. The router ibnotify function 1000 stores 1010 the user call back function 1004 and the application reference pointer 1006 into the session structure 512 identified by the session pointer 513 and determines 1012 the libud 514 from the referenced router session structure 512. If 1014 the user call back function reference 1004 is a null, the router ibnotify function establishes 1016 the call back function as a router null function (not shown). If the user call back function 1004 is something other than a null, the router ibnotify function 1000 establishes the call back function as a router call back function 1020. Specifically, the router ibnotify function calls 1018 the ibnotify function on the relevant underlying dll 102 or 202 and passes to it parameters including: the libud 514, the interrupt mask 1002, the router call back function 1020, and the appropriate session pointer 513. This step serves to establish that the function called in response to the programmed event is the router call back function 1020. The router call back function 1020 then calls the user call back function based upon the session pointer 513 sent to it. Upon return from the ibnotify function call to the relevant underlying dll 102, 202, the router ibnotify function 1000 sets 704 the router global status variables 703 based upon the underlying dll global status variables 702 and returns the ibstatus parameter 804.

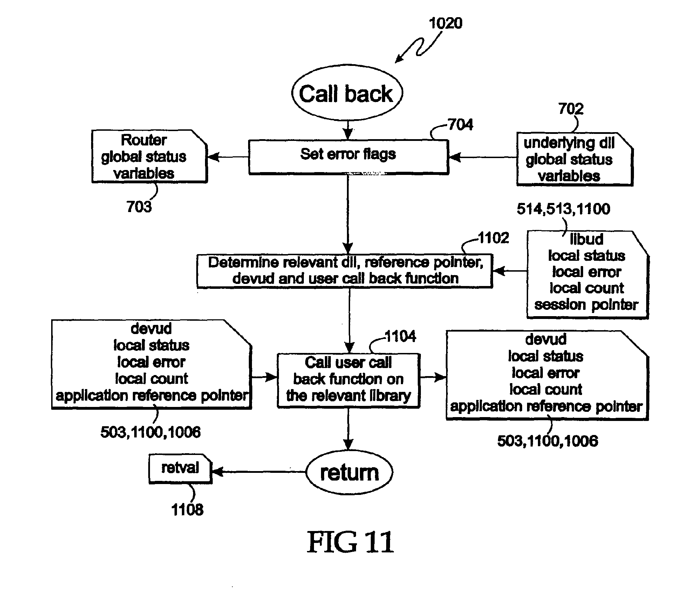

With specific reference to FIGURE 11 of the drawings, there is shown a flow chart for the router call back function 1020. When one or more of the programmed interrupt events occurs, the router call back function 1020 is called by the underlying dll function that monitors the interrupt events. The router call back function 1020 receives the parameters: the libud 514, the session pointer 513, and local status, error and count parameters 1100. In a first step in an embodiment of the router call back function 1020 according to the present teachings, the router global status variables 703 are set to values consistent with the underlying dll global status variables 702. From the session pointer 513 passed to it, the router call back function 1020 determines, the devud 503, the user call back function and the application reference pointer 1006. Recall from FIGURE 10 of the drawings, the devud 503 passed to ibnotify, the user call back function 1004 and application reference pointer 1006 are stored in the session structure 513 which was passed to the router call back function by the underlying library as the fourth parameter. Accordingly, the router call back function 1020 is able to access the information based on the session pointer 513 sent to it. The local status, error and count variables 1100 are part of the router call back function 1020 API and are not used by the router 200. The router call back function 1020 then calls the user call back function 1004 passing it the devud 503, the reference pointer 1006 and the local status, local error and local count parameters 1100 from the underlying dll function that monitors the interrupt events.

A specific embodiment of the present teachings is implemented using a Windows operating system by Microsoft Corporation running on a personal computer. The original and new dlls support different interface cards that communicate with the personal computer. As part of an installation for the new dll, a global registry of board indices is built that is accessible by the router 200 that indicates whether a application indicant is supported by the new dll. In a specific embodiment that supports only two dlls, an original dll and a new dll, if a application indicant is found in the registry, it is known that the new dll is the relevant dll for the device specified. If the application indicant is not found in the registry, it is assumed that the original dll supports the device having the specific application indicant. In an alternate embodiment, each dll 102, 202 has a respective application indicant array known to it internally. When the application 100 calls a function that specifies a application indicant, the router 200 then calls that function on each of the dlls in turn until it finds a dll that returns without generating an error. The dll that failed to return an error is used as the relevant dll 516 in the session structure 512. If all dlls return an error, the router 200 will pass the error and status information returned by the last function call to the dll 102, 202 to the application 100. Note that the router 200 determines the order in which the dlls are called and in cases of application indicant conflicts (where more than one dll supports a given application indicant) the first dll called by the router 200 that supports the application indicant in question (that is it does not return an error) is the dll that is used in the application 100. In yet another alternate embodiment that supports two input/output dlls, the router 200 maintains a two-dimensional application indicant array that reflects support for only one of the dlls, the original dll 102, for purposes of this immediate description as an example. The first dimension represents all possible board numbers supported by the original dll 102. The second dimension contains a zero or false if the board is not present and a one or true if the board is present. When the application 100 calls a function in the router 200 that opens a session, it passes the application indicant to reference the appropriate hardware. If the application indicant is found in the application indicant array and is present, the corresponding function in the original dll is called. If the application indicant is found in the application indicant array and is not present, the router 200 returns an error to the application 100. If the application indicant is not found in the application indicant array, the application indicant is simply passed through to the function in the second dll. In yet another alternative embodiment, the router 200 may administer as many application indicant arrays as there are supported dlls in order to handle all error as a result of calls made to hardware required by the function calls that is not present or operational.

Specific embodiments are herein described by way of example. Alternative embodiments not specifically described will occur to one of ordinary skill in the art given benefit of the present teachings. Specifically, other dlls not specifically mentioned may be adapted for use in conjunction with an intermediate router to provide administration between dlls. Other embodiments and adaptations will occur to one of ordinary skill in the art are considered within the scope of the appended claims.

## Claims

1. A method of adapting a processing system to cause an application that references an original library ("dll") with an original application programming interface ("API") to be simultaneously compatible with a new dll sharing the original API, the method comprising the steps of:
Establishing a router having the original API,
Renaming the original dll having an original name to a first name,
Storing the new dll under a second name, and
Storing the router under the original name, wherein the router intercepts function calls to the original dll and administers access between the application and the original and new dlls.

2. A method as recited in claim 1 wherein the step of storing the new dll comprises the step of copying from a dll reserve file to the second name and the step of storing the router comprises the step of copying from a router reserve file to the original name.

3. A method as recited in claim 1 wherein function calls intercepted by the router accept a device unit identifier that cross references to a library unit identifier and relevant dll to direct function calls to the relevant dll.

4. A method as recited in claim 1 and further comprising the steps of restoring the processing system to a state where the application uses the original dll having the original name.

5. A method as recited in claim 4 wherein the step of restoring further comprises the step of deleting the router having the original name at the original location, and renaming the original dll to the original name at the original location.

6. A method as recited in claim 1 wherein the original API defines at least one function that accepts an application indicant and returns a device unit identifier wherein the router establishes a session structure that associates the application indicant with the relevant dll, wherein the device unit identifier is returned to the application and is used for subsequent access to the application indicant.

7. A method as recited in claim 1 wherein the original and new dlls are input/output libraries that control original and new interface hardware.

8. A method as recited in claim 1 and further comprising the router establishing a call back to a function in the router from the relevant dll in response to an interrupt event.

9. A method as recited in claim 1 wherein the original and new dlls contain a plurality of functions and the router contains a respective plurality of functions that administer access to the original and new dlls from the application.

10. A processing system to adapt an application that references an original library ("dll") with an original application programming interface ("API") to be simultaneously compatible with a new dll sharing the original API, the system comprising:
A processor communicating with a storage device,
The original dll stored on the storage device and having an original name,
a router configured to execute on the processing system, the router having the original API, and
A background process configured to execute on the processor to identify the original dll, wherein the background process is configured to rename the original dll to a first name, store the new dll to a file having a second name, and store the router to a file having the original name.

11. A system as recited in claim 10 wherein the new dll is stored in a dll reserve file and the router is stored in a router reserve file wherein the background process copies the new dll from the dll reserve file to the second name and copies the router from the router reserve file to the original name.

12. A system as recited in claim 10 wherein the original API includes a device unit identifier that indicates to the router whether to call a function in the original dll or the new dll.

13. A system as recited in claim 12 and wherein the router is configured to cause the processor to intercept calls to functions in the original dll and administers access to the new and original dlls based upon the device unit identifier.

14. A system as recited in claim 10 wherein the background process restores the processing system to a state where the application uses the original dll having the original name.

15. A system as recited in claim 14 wherein the background process is configured to delete the new dll having the second name, delete the router having the original name, and rename the original dll to the original name.

16. A system as recited in claim 10 wherein the original API has at least one initialize function that accepts an application indicant and returns a device unit identifier wherein the router establishes a session structure that associates the device unit identifier with a relevant dll, wherein the device unit identifier is returned to the application for subsequent access to the device.

17. A system as recited in claim 10 wherein remaining calls the original and new dlls are input/output libraries that control interface hardware.

18. A system as recited in claim 10 wherein the router establishes a call back to a function in the router from one of the dlls in response to an interrupt event.

19. A system as recited in claim 10 wherein the original and new dlls contain a plurality of functions and the router contains a respective plurality of functions that administer access to the original and new dlls from the application.

20. A method of updating a processing system comprising the steps of:
Identifying an original library("dll") having function calls called by an application and having an original application programming interface ("API"),
Adapting a file structure of the processing system wherein the application calls functions in a router having the original API and the router calls corresponding functions in the new and original dlls.

21. A method as recited in claim 20 wherein function calls intercepted by the router accept a device unit identifier that cross references to a library unit identifier and relevant dll to direct function calls to the relevant dll.

22. A method as recited in claim 20 wherein the original API defines at least one function that accepts an application indicant and returns a device unit identifier wherein the router establishes a session structure that associates the application indicant with the relevant dll, wherein the device unit identifier is returned to the application and is used for subsequent access to the application indicant.

23. A program execution apparatus comprising:
An application,
At least two libraries ("dlls") sharing an application programming interface ("API"), and
A router sharing the API, intercepting function calls from the application, and administering access between the application and the dlls.

24. A program execution apparatus as recited in claim 23 wherein the router determines a relevant dll based upon information passed to it from the application.

25. A program execution apparatus as recited in claim 24 wherein the relevant dll passes a library unit identifier ("libud") that is related to a specific element to the router, the router maintains the libud in arouter session structure and passes a device unit identifier ("devud") to the application, the application uses the devud for subsequent function calls referencing the specific element wherein the application passes the devud to the router, the router uses the devud to retrieve the libud and the relevant dll from the respective router session structure and passes the libud to the relevantdll.

26. A program execution apparatus as recited in claim 24 wherein there is a one to one correspondence between function calls in the router and function calls in the dlls and function calls in the router called by the application call a respective function in the relevant dll.
